# EUROPEAN PATENT APPLICATION

(11) **EP 2 083 381 A1**
(43) Date of publication of application: **29.07.2009**
(21) Application number: 08290069.7
(22) Date of filing: 28.01.2008
(51) Int. Cl.: G06Q 10/00, B65G 1/00, B65G 43/00

(54) **System and method for stowing and unloading heterogeneous and eclectic objects in accordance with free form geometric containers**

(71) Applicant: I-EEM.Enterprise (SARL), 94700 Maisons-Alford (FR)
(72) Inventor: Bredin, M. Francis, 94700 Maisons-Alfort (FR)

(57) **Abstract**

A system and method for stowing heterogeneous and/or eclectic objects into a free-form geometric container in accordance with their identification's intrinsic criteria and their associated 3D representation, both of them, allowing strengthening of a packaging supply-chain process in accuracy. The packaging supply-chain process having at least, a loading scenario methodically implemented, the loading scenario further providing a user with guidance for monitoring an unloading scenario of an object from a container in a predefined order and further having a bi-directional tracking capability ensuring the integrity of the packaging supply-chain process from a source to a destination.

## Description

### Technical field

The present invention relates generally to the field of packaging domain applications and more particularly to a system and method for stowing and unloading heterogeneous and eclectic objects in accordance with free form geometric containers by maintaining a bi-directional traceability from a source to a destination of such domain applications.

### Background

It is known in the art that stowing an eclectic material into a delimited space or volume is often understood without conscious reasoning and strategy. Depending on the way to achieve such an operation, a major objective for a user consists in arranging a given material into a given container by maximizing the volume utilization of the container as well as by optimizing the material transportation from a source to a destination.

Faced with such an evident function it is also desirable that the material has to be correctly referenced for business purpose and quickly loaded and unloaded whatever the application domain, the material type and the container type. Moreover, the large scope of today's packaging application causes the domestic-use and the industrial-sector-use to be in accordance with other rules and standards like governmental regulations and safety standards.

Thus, the arrangement of various heterogeneous materials such as glass, wood, plastics, metals, paper, card-board, liquid and chemical has to be in accordance with the transport recommendations and current safety guide lines.

It is even more difficult for a user to stow a series of heterogeneous objects in a container that is not appropriate for the user application. For example, if the object properties are not compatible with the container characteristics, like stowing glasses and bottles in a reinforced concrete container.

Another concern resides when a user has to determine the adequate container beforehand or just before starting the stowing of a series of heterogeneous objects. For example, this situation can appear, when an airport administrative initiates a check-in of the luggage of a passenger and wants to determine an appropriate passenger compartment for stowing the luggage in.

The existing method presents several drawbacks, some of which are listed hereinafter:
1. Qualities and particularities of both the objects and a container are not linked together when initiating a packaging arrangement process.
2. Qualitative aspects of the packaging arrangement in terms of size, form factor, weight, volume and available space are not provided to the user.
3. Relationship between objects and container is ignored.
4. Mixing up of different heterogeneous objects is not monitored.
5. Conformity with the governmental regulations that cover transport of chemical objects or other dangerous objects (not mentioned here) is not respected.
6.Arrangement method of the objects into a container is not optimized.
7. Existing arrangement processes and methods are not compliant with the safety standards.
8. There exists no user interactive assistance for stowing heterogeneous objects in a delimited space.

As mentioned above, existing solutions is not compatible with the new trend of packaging business. The new trend of packaging business represents all parties that are concerned by the packaging supply chain such as manufacturer, packers, distributors, users and even individuals. The packaging business can be also extended to more industrial domains like railway, automotive, avionic, ship industry, transport and any other means allowing a material to be arranged in a delimited area and/or space.

The present invention offers a solution to solve the aforementioned problems.

### Summary of the invention

Accordingly, a great object of the invention is to provide a packaging arrangement system and a method for assisting a user, particularly when challenging a real-time loading and unloading of heterogeneous and eclectic objects packaged into a free form geometric container of such a system which overcome the above issues of the prior art.

It is a second object of the present invention to provide multiple techniques, based on RFID capabilities or Swept volume technique or 3D Digitized format, to determine the quality and the particularity of both the objects and the container.

It is further an object of the present invention to check unambiguously the compatibility of the collected objects the one in regards to the other ones before placing them into a container as well as the compatibility of a container before receiving a series of objects.

It is also an object of the present invention to use a packaging arrangement feedback-loop mechanism to control dynamically the loading and the unloading sequences of an object.

Likewise, it is an object of the present invention to derive automatically the appropriate loading and unloading sequences requested by a user and to automate sequentially an unloading operation of the objects from a container in a pre-defined order.

Another object of the present invention is to provide a user with a three-dimensional map feasibility of the placement iteration, including the exact location of the identified objects within the container volume for displaying to a user.

Yet another object of the invention is to maintain a bi-directional traceability between a loading and an unloading process and to perform a real time tracking from a loading source to an unloading destination all along the packaging supply chain.

A further object of the invention is to detect packaging integrity violation when moving a container from a source to a destination.

Finally, it is an object of the invention to use a sophisticated 3D volumetric computation arrangement system by mixing multiple acquisition techniques.

According to one embodiment of the invention, there is provided a computer-implemented method to operate a loading and an unloading of objects into a container all along a packaging arrangement supply chain. The method for operating a loading and an unloading of objects into a container, comprises the steps of:
- determining among a list of objects and containers the adequate candidates and;
- loading environmental constraints and governmental recommendations and;
- pre-processing multiple placement iterations and;
- generating a three-dimensional placement feasibility for displaying to the user and;
- receiving user requirements and interacting with the system accordingly and;
- generating both final loading and unloading scenarios and;
- storing optimum iteration to be used on similar application and;
- maintaining a bidirectional traceability all along the packaging supply chain and;
- reporting integrity violations to the user and;
- notifying the user of the packaging system processing.

The present invention allows the packaging supply chain to be fully compliant with the evolution of the packaging domain associated with the new trend of wireless technology used for packaging identification and real time tracking.

The present invention makes the packaging supply-chain strategy to be fully compatible with the today's business generated from numerous industrial sectors like automotive, avionic, ship industry, railway, transport and any other ones when packaging has to be moved from source to destination by the use of carrier and/or transport and/or freight companies and/or aircraft companies.

The present invention is also compatible with movable vehicles on which a container already exists like cars, trucks, aircrafts, boats and buses. It also operates in others domains like fix containers, storehouse and any other storage concepts. Meaning by container is luggage van, car-boot and luggage compartment and any repository that can receive objects to be stowed in pre-determined orders.

RFID tags and/or identification devices and/or any identification features are standardized allowing each object to be perfectly recognized all along the stowing process and/or when operating different optimization iterations with the container.

If implemented, the RFID identification tag of the object is read by a readable RFID machine (not described here) and can be provided by a personal computer like intelligent organizer or pocket computer or car onboard computer (not shown here) or equivalent.

The three-dimensional image or/and equivalent 3D data of a container can be provided either by 3D components or from container manufacturers or from other providers to serve as reference for initiating the packaging arrangement.

The software languages for formatting the 3D representation of the objects, container and map feasibilities can be developed in a format compatible with any intelligent organizer or pocket computer or car onboard computer or equivalent system based on micro-computer and/or controller or equivalent.

It is to be noted that the present invention is not limited to the use of a single container but is suitable for stowing a series of heterogeneous objects to multiple containers for which their proprieties and particularities are fully compatible with the objects they receive. Particularly, a typical application consists in automatically stowing a series of luggage in a pre-selected passenger compartment located in whether a car/bus or a train or an aircraft or a ship/boat by pre-determining the adequate compartment for stowing the compatible luggage in and the reverse. Such a method allows identifying the appropriate compartment that can receive the passenger luggage. Furthermore, by tagging the luggage in a way that is appropriate it is possible to maintain luggage traceability from a source to a destination.

In a commercial form, the aforementioned electronic means to operate the steps of the present invention are compatible with the Wireless technology like the Radio Frequency Identification (RFID) or/and the Tamper Resistant Embedded Controller (TREC) or/and the 3D swept techniques or/and the packaging supply chain business strategy.

In addition, the present invention boosts efficiently the business profitability from the identification of an object to a final application of a client. This is accomplished by including in the packaging process a large amount of actors in addition with a cost reduction value added for a client by refining its packaging supply chain in improvement. Such actors represent the RFID manufacturers, the RFID readable machines providers, the 3D acquisition system providers, the µcomputing and soft developers, the diagnostic system providers as well as the automotive, avionic, railway, ship industry, freight companies and container manufacturers.

According to the invention, there is provided a system and method as further described in the appended independent claims. Further embodiments are described in the appended dependent Claims. Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the accompanying drawings wherein:
FIG.1 illustrates by schematic blocks diagram the Interactive Packaging Arrangement Decision-maker System (IPADS) in a preferred environment (100) for practicing the invention.
FIG.2 depicts in a high level, the functional blocks of the Loading Unloading Object Manager (FIG.1:104) of the present invention.
FIG.3 depicts in a high level, the functional blocks of the Object Outer Data Acquisition (FIG.1:106) of the present invention.
FIG.4 depicts in a high level, the functional blocks of the Container Inner Data Acquisition (FIG.1:108) of the present invention.
FIG.5 depicts in a high level, the functional blocks of the Packaging Arrangement Engine (FIG.1:110) of the present invention.
FIG.6 represents a flow chart process (600) of the Interactive Packaging Arrangement Decision-maker System (IPADS) when initiating a loading and an unloading process.

### Detailed description of the invention

Embodiments of the invention are described herein after by way of examples with reference to the accompanying figures and drawings.

More specifically, according to a first aspect, the present invention consists in a packaging arrangement system, herein named Interactive Packaging Arrangement Decision-maker System (IPADS), and a method for stowing and unloading heterogeneous and eclectic objects in accordance with free form geometric containers by maintaining a bi-directional traceability from a source to a destination.

The method is compatible with the packaging domain evolution based on wireless technology. A wireless technology like the Radio Frequency Identification (RFID) allowing an effective packaging identification associated to a real time tracking performance. Even if some solutions offer a wide variety of different RFID standards, the preferred implementation is motivated by the need to provide an effective packaging identification at low cost. This is accomplished through an identification approach using passive RFID tags.

In a preferred implementation, the RFID packaging identification is fully compliant with the EPCglobal Network convention and application guidelines that use ISO standards, including but not limited to "ISO15693", "ISO18000", "ISO14443" and the anti-collision protocols. The EPCglobal Network provides the conventions about the EPC (Electronic Product Code) arrangement, the ID System (EPC tags and Reader), the Object Name Services (ONS), the Physical Markup Language (PML) and finally the Savant that represents the engine of the data management based on software technology.

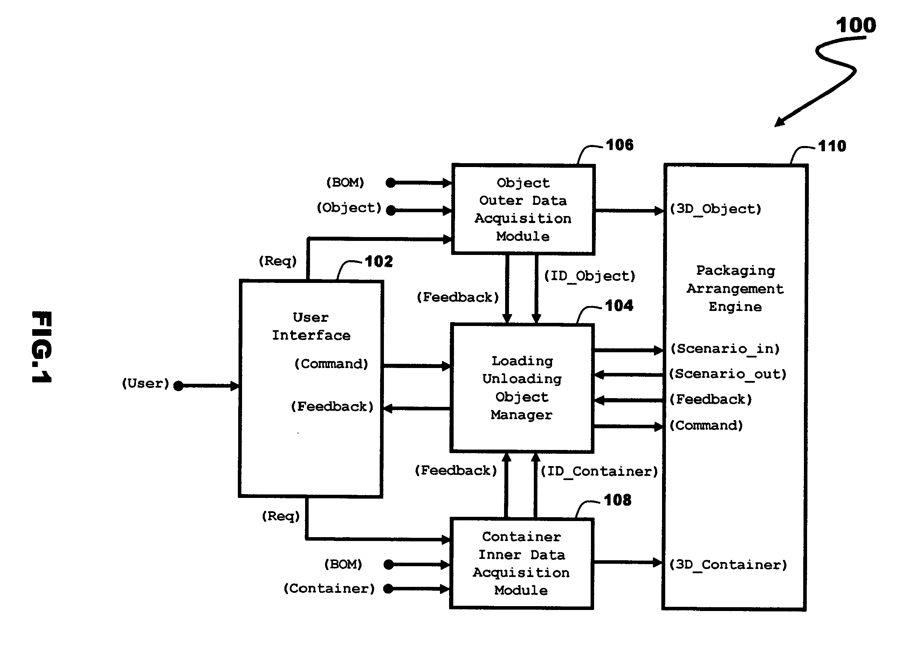

FIG.1 illustrates by schematic blocks diagram the Interactive Packaging Arrangement Decision-maker System (IPADS) in a preferred environment (100) for practicing the invention.

The preferred environment (100) comprises a User Interface (102), a Loading Unloading Object Manager (104), an Objects Outer Data Acquisition Module (106), a Container Inner Data Acquisition Module (108) and a Packaging Arrangement Engine (110).

The User Interface (102) communicates with the Loading Unloading Object Manager (104), the Objects Outer Data Acquisition Module (106) and the Container Inner Data Acquisition Module (108).

The User Interface (102) functionality is twofold.

Firstly, it allows a user to trigger some Interactive Packaging Arrangement Decision-maker System's available commands, in real time. Generally, such commands (Command) initiate either a loading or an unloading scenario or a test packaging arrangement simulation or a resuming packaging activity as well as a tracking bi-directional supply chain loading-unloading comparison operation or any other available operations previously loaded in the system by the user. Moreover, it allows the user to transmit some requirements (Req) to the acquisition modules (106, 108). An example of user requirements is described thereupon: when a passenger checking in, an airport administrative can pre-determine among a plurality of passenger compartments located in an aircraft an adequate one for stowing the passenger luggage and this by respecting the other passenger luggage already in place. The airport administrative can also add a passenger identifier on the luggage allowing the luggage to be tracked and easily detected when checking out. It is to be noted that a person skilled in the art can easily imagine numerous other examples of user requirements.

Secondly, the User Interface (102) transmits system execution's reports, like packaging feedback messages (Feedback), for displaying to the user. Such reports allow the user to interact via the user command (Command), in real time, with an ongoing operation. The packaging feedback message is daisy chain-based and propagates messages from different modules to the user.

The Loading Unloading Object Manager (104) receives user commands (Command) from the User Interface (102) and transmits them to the Packaging Arrangement Engine (110) for action. Then, it collects the information related to the identification of both the objects (ID_Object) and the containers (ID_Container) from respectively the Objects Outer Data Acquisition Module (106) and the Container Inner Data Acquisition Module (108). The Loading Unloading Object Manager (104) interprets both the objects and container information it receives, runs the applying user commands (Command) and generates packaging scenario guidance (Scenario_in) accordingly. Then, the Loading Unloading Object Manager (104) hosts the packaging scenario guidance (Scenario_in) to feed the Packaging Arrangement Engine (110).

The Objects Outer Data Acquisition Module (106) is coupled to both the Loading Unloading Object Manager (104) and the Packaging Arrangement Engine (110). It receives the user requirements (Req) from the User Interface (102).

In use, the Objects Outer Data Acquisition Module (106) collects the objects (Object), allows the user to insert an identifier to the object by using the user requirements (Req) and identifies the properties and the particularities of each object before placing it into a container (ID_Object). Then, it references the objects that are in accordance with the user requirements (Req), rejects the objects contrary to the user requirements (Req), notices the user accordingly (Feedback) and generates a corresponding 3D symbolic representation (3D_Object) that feeds the Packaging Arrangement Engine (110).

The Container Inner Data Acquisition Module (108) is coupled to both the Loading Unloading Object Manager (104) and the Packaging Arrangement Engine (110). It receives the user requirements (Req) from the User Interface (102).

In use, the Container Inner Data Acquisition Module (108) acquires the container properties and particularities from a series of containers. Then, it identifies the container (ID_Container) that is in accordance with the user requirements (Req), references the container accordingly, notices the user in case of failure (Feedback) and generates a corresponding 3D symbolic representation (3D Container) that feeds the Packaging Arrangement Engine (110).

The Packaging Arrangement Engine (110) uses the packaging scenario guidance (Scenario_in) previously stored in the Loading Unloading Object Manager (104) to infer the relationship between the objects and the container. By the acquisition of both the 3D symbolic representation of each object associated to a container from the acquisition modules (106, 108), the Packaging Arrangement Engine (110) derives automatically the appropriate loading scenario and runs different placement iterations. Then, it generates a final scenario (Scenario_out) accordingly. The final scenario (Scenario_out) is applied to the Loading Unloading Object Manager (104) for monitoring the unloading process and thereby allowing the ongoing packaging scenario guidance to be readjusted in real time in case of user necessity.

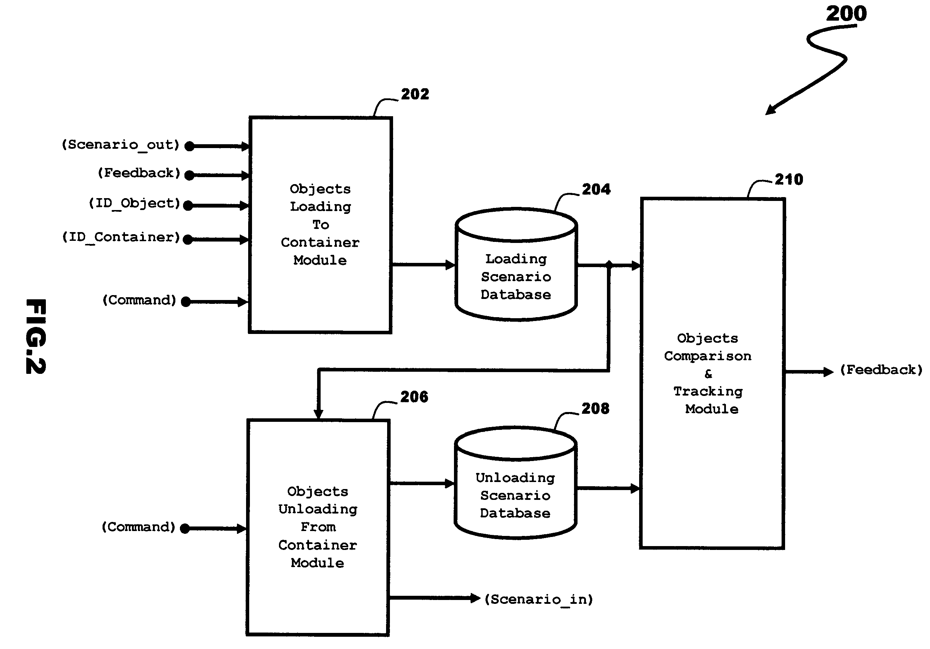

FIG.2 depicts in a high level, the functional blocks of the Loading Unloading Object Manager (FIG.1:104) of the present invention.

The Loading Unloading Object Manager (200) comprises an Objects Loading to Container Module (202) and its associated Loading Scenario Database (204), an Objects Unloading from Container Module (206) and its associated Unloading Scenario Database (208) and finally an Objects Comparison and Tracking Module (210).

The Loading Unloading Object Manager (200) monitors a loading, an unloading, a comparing and a tracking of objects in accordance with container characteristics.

The Loading Unloading Object Manager (200) uses the information related to each object (ID_Object) and container (ID_Container) provided respectively by the Objects Outer Data Acquisition Module (FIG.1:106) and the Container Inner Data Acquisition Module (FIG.1:108) in combination with the user command (Command). In addition, it receives scenario iterations (Scenario_out) and feedback messages (Feedback) from the Packaging Arrangement Engine (FIG.1:110).

The Objects Loading to Container Module (202) is a knowledge-based system. It analyses a series of objects by interpreting each object's identification (ID_Object) before packaging it into a container when entering into a loading process. The Objects Loading to Container Module (202) collects a series of heterogeneous objects, identifies their properties as well as their intrinsic characteristics and checks their compatibility with a selected container (ID_Container). Then, the Objects Loading to Container Module (202) generates a corresponding loading scenario (Scenario_in). The loading scenario contains various parameters belonging to the current loading process like historical/used packaging scenario and procedure guidance. Faced with particular situations, the loading scenario can be readjusted in real time by integrating packaging parameters containing some directives of scenario iterations (Scenario_out) and feedback messages (Feedback). Both of them are issued from the Packaging Arrangement Engine (FIG.1 110). Once the loading process is complete, an updated scenario (Scenario_out) overrides the original scenario (Scenario_in) accordingly. The Objects Loading to Container Module (202) transmits the loading scenario (Scenario_in) to the Loading Scenario Database (204). The Loading Scenario Database (204) hosts the loading scenario into a memory (not described here) for future re-use or to other adequate support that a person skilled in the art can easily imagine. Based on a historical approach, the Loading Scenario Database (204) provides the possibility to replicate a validated loading scenario to another packaging supply chain that uses an identical container or historical/used packaging scenario.

The overridden loading scenario (Scenario_in) is transmitted from the Loading Scenario Database (204) to the Objects Unloading from Container Module (206). It serves as baseline for monitoring an unloading process in a pre-defined order and provides the Objects Comparison and Tracking Module (210) with a robust referential when initiating a loading-unloading comparison process.

The Objects Unloading from Container Module (206) is a knowledge-based system. The Objects Unloading from Container Module (206) allows a user to unload a series of objects from a container, in real time, by using an unloading scenario methodically implemented. It provides a user with a set of packaging guidance allowing a sequential unloading of a series of objects from a container when entering into an unloading process. The user enables the unloading process by applying the adequate command (Command) on the Loading Unloading Object Manager System (200).

The overridden loading scenario (Scenario_in) from the Loading Scenario Database (204) automates the unloading process of the Objects Unloading from Container Module (206). Thus, the Objects Unloading from Container Module (206) accesses the information related to the objects, interprets them, and derives automatically the adequate unloading scenario for monitoring in real time an unloading of a series of objects from a container in a pre-defined order. The Loading Unloading Object Manager (FIG.1:104) assists the user all along the unloading process. It is to be noted that the unloading process can be also performed by using the robotic technology.

Simultaneously, the Objects Unloading from Container Module (206) generates a corresponding unloading scenario. The unloading scenario contains parameters belonging to the ongoing unloading process like historical/used scenario and procedure guidance. The Objects Unloading to Container Module (206) transmits the unloading scenario to the Unloading Scenario Database (208). The Unloading Scenario Database (208) hosts the unloading scenario into a memory (not described here) or to other adequate support that a person skilled in the art can easily imagine. The unloading scenario provides the "Objects Comparison and Tracking Module (210) with a referential when initiating a loading-unloading comparison process.

The "Objects Comparison and Tracking Module (210)" receives the unloading scenario and its loading companion scenario, in real time, and thereby initiates a comparison process accordingly.

The "Objects Comparison and Tracking Module (210)" maintains a bi-directional traceability between a loading and an unloading process and performs a real time tracking from a loading source to an unloading destination all along the packaging supply chain. Furthermore, it compares the objects previously placed into the container with the objects unloaded from the container when the packaging process complete and it detects potential integrity violation. Indeed, some violations can appear when moving a container from a source to a destination. Such violations are detected when a container is open before reaching a desired destination, or when removing, replacing or adding an object without updating the loading scenario via the Object Loading to Container Module (FIG.2:202). The "Objects Comparison and Tracking Module" (210) sustains the loading and unloading processes tracking. It generates a comparison file, via the feedback channel (Feedback), to be transmitted to the User Interface (FIG.1:102) for displaying and allowing the user to initiate a user command or a corrective action accordingly. It is to be noted that measurements, indicators, data collection, results and log files are aligned to ensure packaging business integrity in regards to the user baselines.

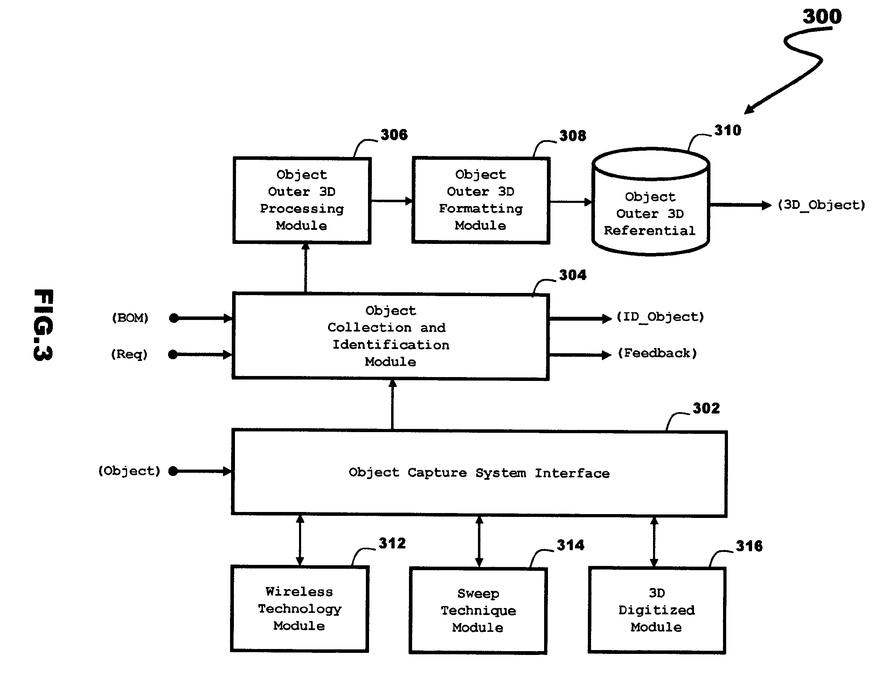

FIG.3 depicts in a high level, the functional blocks of the Object Outer Data Acquisition Module (FIG.1:106) of the present invention.

The Object Outer Data Acquisition Module (300) provides a real to symbolic acquisition mechanism to transform an original geometric free form delineation of an object into a symbolic parallelogram.

The Object Outer Data Acquisition Module (300) validates the coherency of an object in regards to the other ones before placing and arranging into a container. Then it transforms the original geometric free form delineation of the entering object (Object) into a symbolic form and creates a corresponding primitive (3D Object), parallelogram-based, that feeds a Packaging Arrangement Engine (FIG.1:110).

It is to be noted that the original free form delineation of an object differs from an object to the others ones and is not restricted to a parallelogram form. Generally, the original free form delineation of an object corresponds to a randomized form, like a potatoes form or equivalent. The Object Outer Data Acquisition Module (300) transforms the randomized form of an entering object into a cloud of symbolic parallelepiped units and stacks them for determining an equivalent 3D parallelepiped relief image of the outer boundary of the original object free form (3D_Object) that serves afterwards to initiate the Packaging Arrangement Engine (FIG.1:110).

The equivalent 3D parallelepiped relief image uses a 3D volumetric property based on three variables. The 3D volumetric property consists in a (3*3) matrix points including the 3D positions of both the origin's points (x_orig, y_orig, z_orig) and the maximum opposite corner's points (x_max, y_max, z_max) of the object. Each 3D volumetric property belonging to an object (3D_Object) is transmitted to the Packaging Arrangement Engine (FIG.1:110) for initiating a brick wall placement by stacking the 3D parallelepiped relief image of a series of entering objects in a predefined order.

The Object Outer Data Acquisition Module (300) comprises an Object Capture System Interface (302) coupled to an Object Collection and Identification Module (304), an Object Outer 3D Processing Module (306), an Object Outer 3D Formatting Module (308) and an Object Outer 3D Referential (310).

The Object Capture System Interface (302) encapsulates a series of object sub-modules (312, 314 and 316) for acquiring a digitized relief image of an object from different techniques.

In the present invention, the object sub-modules are composed of three entities: a Wireless Technology Module (312), a Sweep Technique Module (314) and a 3D Digitized Module (316) (Catia, Pro-E, UG, Solidworks, IGES, Enovia or equivalent). It is to be noted that in the present invention a simplified description of the techniques including in the object sub-modules is shown but the person skilled in the art would devise any alternative for example catching an object image with camera or other modern features.

Firstly, the Wireless Technology Module (312) consists in treating an object (Object) by using the Radio Frequency Identification (RFID) capabilities. The object must incorporate a RFID tag hosting its intrinsic characteristics, like relief, properties and particularities. A wireless encoding machine (not shown here) encodes the intrinsic characteristics of the object in a RFID tag. Then, an adequate readable machine reads the content of the RFID tag and transmits the content value as object input criteria to the Wireless Technology Module (312). Typically, the object input criteria represents the material type (glass, wood, plastics, metals, paper, card-board, liquid and chemical) associated to the 3D dimensions of the object (x-dimension, y-dimension and z-dimension) and any other specific parameters that qualify a particular object in regards to the other ones.

Secondly, the Sweep Technique Module (314) uses a swept solid volume technique to determine the boundary of an object. In addition, a determination of the properties and the particularities associated with the resulting sweep and the volume's mass properties for an object modelling is provided. A delineation of the boundary of the object represents its intrinsic relief characteristics. By including the material type of the object with the use of the aforementioned technique, the object input criteria become similar to those produced by the Wireless Technology Module (312).

Finally, the 3D Digitized Module (316) treats digital files issued from different volumetric systems that are capable to form a digitized representation of the object in three dimensions. Typically, a tool like CATIA (Computer Aided Three dimensional Interactive Application) generates an adequate 3D file representing the intrinsic relief characteristics of the object. By including the material type of the object with the use of the aforementioned technique, the digitized representation of the object in three dimensions represents a delineation of the boundary of the object as object input criteria. The object input criteria are similar to those produced by the Wireless Technology Module (312) and Sweep Technique Module (314).

The Object Capture System Interface (302) transmits the aforementioned object input criteria to the Object Collection and Identification Module (304).

The Object Collection and Identification Module (304) collects the objects, sorts them, can allow a user to insert an identifier to an object by using the user requirements (Req), like the owner/passenger name of the object, and determines the conformity of each object it receives by reading their object input criteria before depositing it into a container. In addition, for satisfying any particular business purpose the Object Collection and Identification Module (304) can treat objects from an external list, like a bill of material (BOM), in a format compatible with the aforementioned object input criteria.

The Object Collection and Identification Module (304) audits each object on its intrinsic property by reading the object input criteria. In addition, it checks the object integrity, simulates a pre-processing placement of the selected object in regards to the others ones and finally pre-determines a location for the object. It is to be noted that the number of objects to be placed into a container is determined as a function of the object input criteria mentioned above. Then, the Object Collection and Identification Module (304) updates the object input criteria accordingly and encodes, via a signature key generator (not shown here), an object's authenticity signature key.

For example, an authentication of the object can be provided by the use of biometry features, like image recognition apparatus (not shown here). The object's authenticity signature key can be also engraved on the surface of the object by the use of an additional RFID tag or/and a device or/and any other mechanisms that a person skilled in the art can devise.

Typically, the object's authenticity signature key can be generated by the use of a Cyclic Redundancy Checks (CRC) type or a keyed-Hash Message Authentication Code (HMAC) method or equivalent.

Thereby, each object contains its input criteria associated with an authentication in accordance with the user requirements (Req) that identifies unambiguously an object (ID_Object) in regards to the other ones.

The Object Outer 3D Processing Module (306) validates each identified object (ID_Object) as a good candidate before placing into the container, rejects each unidentified object (i.e. out of user requirements) and notices the user accordingly via the feedback message (Feedback). When an object is rejected, the user can initiate an object identification process again by presenting the rejected object to the Object Capture System Interface (302) and its associated sub-modules (312, 314 and 316).

Then, the Object Outer 3D Processing Module (306) generates an estimated object outer boundary of the validated object by interpreting the object input criteria. The generation of the estimated object outer boundary allows the Object Outer 3D Formatting Module (308) to determine an equivalent 3D parallelepiped relief image of the outer boundary from the original object free form. Then, the equivalent 3D parallelepiped volume image is formatted to be compatible with the placement tool in charge of the arrangement of the objects into the container (not described here).

Finally, a concatenation of the formatted object image with the object input criteria and its associated authentication signature generates an object reference. The object reference is hosted into a local database located in the Object Outer 3D Referential (310). The Object Outer 3D Referential (310) provides the Packaging Arrangement Engine (FIG.1:110) with the equivalent 3D parallelepiped (3D_Object) relief image for modeling, simulating the volume reconstruction and displaying result before initiating the object placement into the container during a loading operation. Moreover, it provides the Loading Unloading Object Manager (FIG.1:104) with the necessary object input criteria (ID_Object) to monitor safely the object loading process.

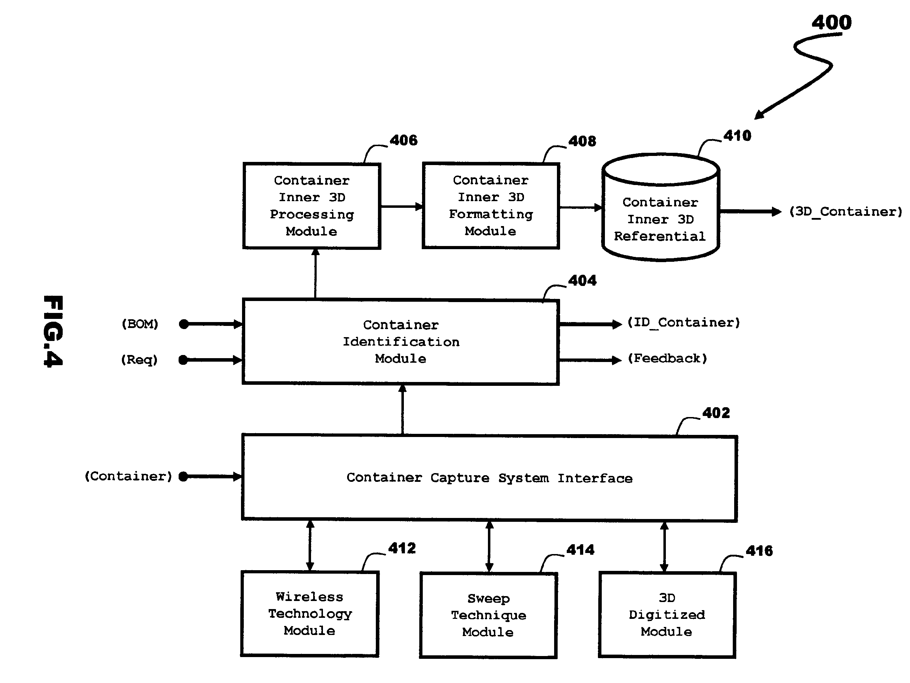

FIG.4 depicts in a high level, the functional blocks of the Container Inner Data Acquisition Module (FIG.1:108) of the present invention.

The Container Inner Data Acquisition Module (400) transforms a real original geometric free form delineation of a container into a symbolic parallelogram.

The Container Inner Data Acquisition Module (400) checks that a container is capable of being used with an identified object before loading. Then it transforms the original geometric free form delineation of the container (Container) into a symbolic form and creates a corresponding primitive (3D_Container), parallelogram-based, that feeds a Packaging Arrangement Engine (FIG.1:110).

It is to be noted that the original free form delineation of a container differs from a container to the others ones and is not restricted to a parallelogram form. Generally, the original free form delineation of a container corresponds to a randomized form, like a potatoes form or equivalent. The Container Inner Data Acquisition Module (400) transforms the aforementioned randomized form into an equivalent 3D parallelepiped volume image (3D Container) corresponding to the inner boundary of the original container free form. Then, the equivalent 3D parallelepiped volume image (3D_Container) serves as reference to place the identified objects via the Packaging Arrangement Engine (FIG.1:110).

The Container Inner Data Acquisition Module(400) comprises a Container Capture System Interface (402) coupled to a Container Identification Module (404), a Container Inner 3D Processing Module (406), a Container Inner 3D Formatting Module (408) and a Container Inner 3D Referential (410).

The Container Capture System Interface (402) encapsulates a series of container sub-modules (412, 414 and 416) for acquiring a digitized volumetric image of a container from different techniques.

In the present invention, the container sub-modules are composed of three entities: a Wireless Technology Module (412), a Sweep Technique Module (414) and a 3D Digitized Module (416) (Catia, Pro-E, UG, Solidworks, Enovia or equivalent). It is to be noted that in the present invention a simplified description of the techniques including in the container sub-modules is shown but the person skilled in the art would devise any alternative for example catching a container image with camera or other modern features.

Firstly, the Wireless Technology Module (412) consists in treating a container (Container) by using the Radio Frequency Identification (RFID) capabilities. The container must incorporate a RFID tag hosting its intrinsic volume characteristics. A wireless encoding machine (not shown here) encodes the intrinsic volumetric characteristics of the container in a RFID tag. Then, an adequate readable machine reads the content of the RFID tag and transmits the content value as container input criteria to the Wireless Technology Module (412). Typically, the container input criteria represents the material type (wood, plastics, metals or others repository types that a skilled person can advise) in combination with the 3D dimensions of the container (xcont-dimension, ycont-dimension and zcont-dimension) and any other specific parameters that qualify a particular container in regards to the other ones, like security guidance, safety rules and governmental directives.

Secondly, the Sweep Technique Module (414) uses a swept solid volume technique to determine the boundary of a container. In addition, a determination of the properties and the particularities associated with the resulting sweep and the volume's mass properties for a container modelling is provided. A delineation of the boundary of the container represents its intrinsic volumetric characteristics. By including the material type of the container with the use of the aforementioned technique, the container input criteria become similar to those produced by the Wireless Technology Module (412).

Finally, the 3D Digitized Module (416) treats digital files issued from different volumetric systems that are capable to form a digitized representation of the container in three dimensions. Typically, a tool like CATIA (Computer Aided Three dimensional Interactive Application) generates an adequate 3D file representing the intrinsic volumetric characteristics of the container. Such digital files can be delivered from a container manufacturer that uses CATIA, Enovia or any similar 3D tools. By including the material type associated with the use of the aforementioned technique, the digitized representation of the container in three dimensions represents a delineation of the boundary of the container as container input criteria. The container input criteria are similar to those produced by the Wireless Technology Module (412) and Sweep Technique Module (414).

The Container Capture System Interface (402) transmits the aforementioned container input criteria to the Container Identification Module (404). The Container Identification Module (404) can allow a user to insert an identifier to a container by using the user requirements (Req), like booking of a container from a list. In addition, for satisfying any particular business purpose the Container Identification Module (404) can treat containers from a list, like a bill of material (BOM), in a format compatible with the aforementioned container input criteria.

The Container Identification Module (404) reads the container input criteria and checks the container compatibility in regards to the user requirements (Req). Consequently, it identifies unambiguously the adequate container (ID_Container), rejects the incompatible ones and notices the user accordingly via the feedback message (Feedback). When a container is rejected, a notification is sent to the user (Feedback) for initiating a container identification process again. Then the user can present the rejected container to the Container Capture System Interface (402) and its associated sub-modules (412, 414 and 416).

The Container Inner 3D Processing Module (406) generates an estimated container inner boundary by interpreting the container input criteria. The generation of the estimated container inner boundary allows the Container Inner 3D Formatting Module (408) to determine an equivalent 3D parallelepiped volumetric image of the inner boundary from the original container free form. Then, the equivalent 3D parallelepiped volumetric image is formatted to be compatible with the placement tool in charge of the arrangement of the objects into the container (not described here).

The equivalent 3D parallelepiped volumetric image of the container is represented by three parametric variables: xcont_dimension, ycont_dimension and zcont_dimension. These aforementioned variable coordinates are equivalent to the maximum delineation of the inner space available. The 3D parallelepiped volumetric image of the container representation is sliced in 3D grid points (x_grid, y_grid, z_grid) with a variable offset in between. The offset step size can be adjustable on request. Each 3D grid point serves as reference point to stack the objects into the container. The object origin's points (x_orig, y_orig, z_orig) are adjusted with the appropriate grid's points (x_grid1, y_grid1, z_grid1). This is performed by respecting the dimension of the object (x_dimension, y_dimension, z_dimension), the object input criteria that define the volumetric properties of an object and the maximum delineation of the container (xcont_dimension, ycont_dimension, zcont_dimension).

Finally, a concatenation of the formatted container image with the container input criteria generates a container reference. The container reference is hosted into a local database located in the Container Inner 3D Referential (410). The Container Inner 3D Referential (410) provides the Packaging Arrangement Engine (FIG.1:110) with the equivalent 3D parallelepiped (3D_Container) volumetric image for modeling, simulating the volume reconstruction and displaying result before initiating the object placement into the container during a loading operation. Moreover, it provides the Loading Unloading Object Manager (FIG.1:104) with the necessary container input criteria (ID_Container) to monitor safely the object loading process

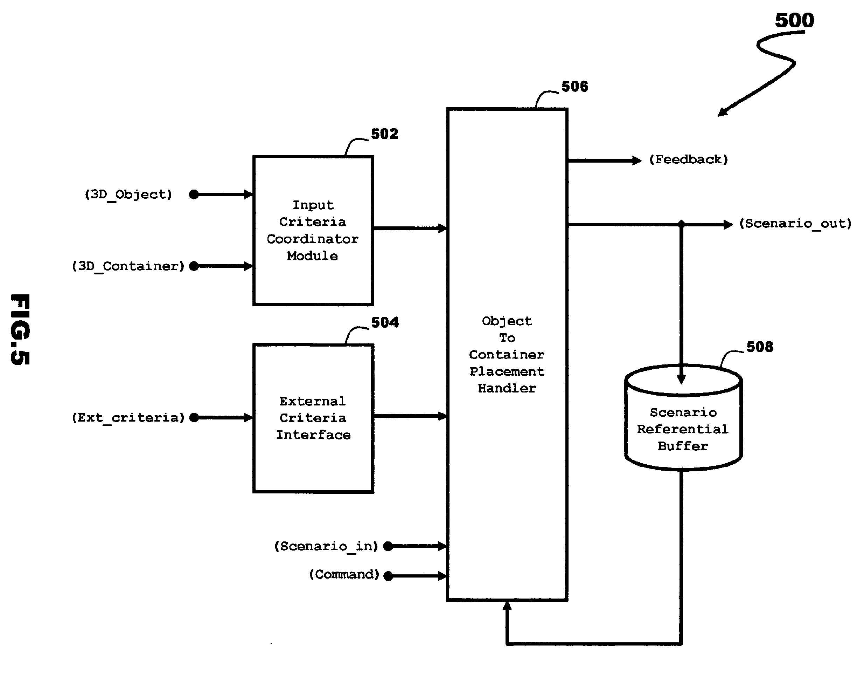

FIG.5 depicts in a high level, the functional blocks of the Packaging Arrangement Engine (FIG.1:110) of the present invention.

The Packaging Arrangement Engine (500) operates with a method applicable in various business contexts and packaging supply-chain strategies. The Packaging Arrangement Engine (500) is coupled to the Loading Unloading Object Manager (FIG.1:104), the Objects Outer Data Acquisition Module (FIG.1*:106*) and the Container Inner Data Acquisition Module (FIG.1:108). It also provides the user with reporting of the packaging arrangement system execution by flushing the adequate feedback message (Feedback) through the Loading Unloading Object Manager (FIG.1:104) and the User Interface (FIG.1:102).

In addition, the object arrangement iterations are stored into a Scenario Referential Buffer (508) for reusing in other application. The Scenario Referential Buffer (508) allows a user to save particular scenarios (Scenario_out) directly by using an adequate memory support, like USB Key, CD, smartcard or any other support that a person skilled in the art can easily imagine.

The activation of the Packaging Arrangement Engine (500) comes with a user command request (Command).

The Packaging Arrangement Engine (500) consists in an Input Criteria Coordinator Module (502), an External Criteria Interface (504) and an Object-to-Container Placement Handler (506) associated to a Scenario Referential Buffer (508).

The Input Criteria Coordinator Module (502) receives both the object references (3D_Object) and the container references (3D_Container) from respectively the Objects Outer Data Acquisition Module (FIG.1:106 and the Container Inner Data Acquisition Module (FIG.1:108) to feed the Object-to-Container Placement Handler (506).

The External Criteria Interface (504) provides the Object-to-Container Placement Handler (506) with additional criteria that are important when processing packaging arrangement program. Such external criteria qualify a material (object and container) in which the business operates and represent particular business requirements, like context identification and/or an application domain and/or a container type. In addition, the large scope of packaging application causes the domestic-use and the industrial-sector-use to be in accordance with governmental regulations and the current safety standards. For the sake of simplicity, the aforementioned external criteria are renamed in Ext_criteria.

The Object-to-Container Placement Handler (506) merges the 3D data issued from the Input Coordinator (502) with the additional external criteria (Ext_criteria) coming from the External Criteria Interface (504) and parses them with the scenario instructions included in the loading scenario (Scenario_in). The aforementioned scenario instructions are located in the Loading Unloading Object Manager (FIG.1:104).

When a loading process is initiated the Object-to-Container Placement Handler (506) optimizes the placement of the objects into the container by considering the object references (3D_Object), the container references (3D_Container), the external input criteria (Ext_criteria), the user command (Command) and the loading scenario (Scenario_in). The Object-to-Container Placement Handler (506) interprets 3D data gathering, deals with the objects and container references, determines some packaging arrangement iterations, displays three-dimensional map feasibilities and places the objects in the container according to the loading scenario instructions. Moreover, the Object-to-Container Placement Handler (506) simulates different pre-placement possibilities, rates the packaging arrangement performance, diagnoses placement failures and eventually defines a placement adjustment to be applied to the ongoing loading scenario in real time.

For each placement iteration is created a referential file containing all loading scenario parameters (Scenario_out) and an associated feedback message (Feedback) that prompts the user to pause and/or to adjust the loading scenario according to the placement situation and/or to confirm an action until the final iteration occurs.

Then the Object-to-Container Placement Handler (506) stores the referential scenario iterations into a memory support like a Random Access Memory (RAM) or equivalent (not shown here) located in the Scenario Referential Buffer (508). The Object-to-Container Placement Handler (506) periodically updates the storage device that makes the Scenario Referential Buffer (508) in sync with the user adjustments. Thus, the Scenario Referential Buffer (508) stores information on various placement iterations allowing the Object-to-Container Placement Handler (506) to set up the correct actions fitting with the rate of the arrangement performance. Finally the Object-to-Container Placement Handler (506) identifies an optimum loading scenario (Scenario_out) from the Scenario Referential Buffer (508) and transmits it to the Loading Unloading Object Manager (FIG.1:104) for hosting into the Loading Scenario Database (FIG.2:204) that will serve afterwards to run an unloading process.

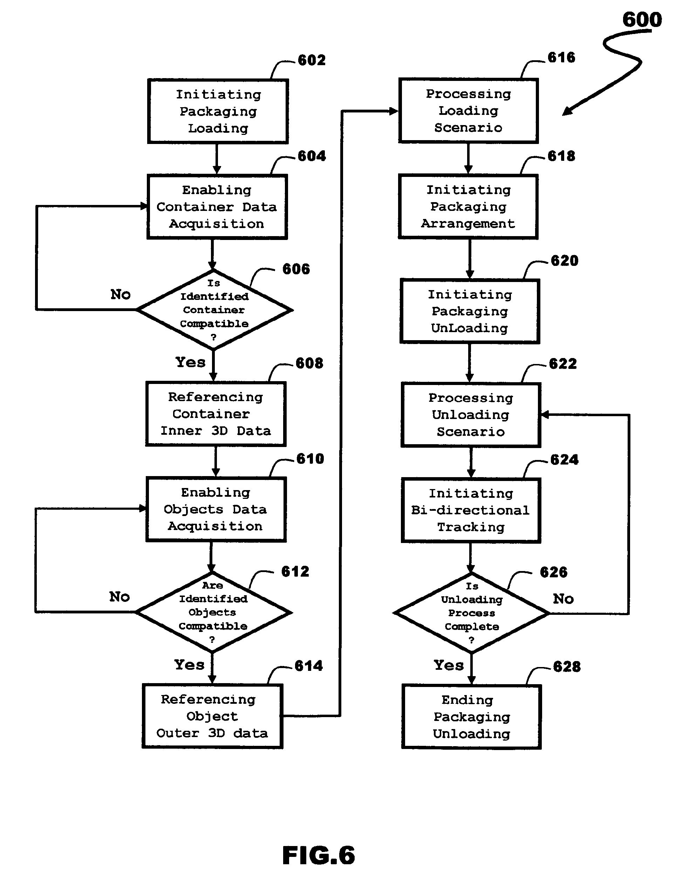

Referring now to FIG.6, a flow chart process (600) represents the Interactive Packaging Arrangement Decision-maker System (IPADS) (100) when a user initiates a loading and an unloading process. The loading process starts at step 602. It is to be noted that in the present flow chart process a step of container acquisition is first initiated but the person that is skilled in the art can easily perceive that a step of object acquisition can be also first initiated as well and thus with no changes on the global meaning of the flowchart process.

Step 602 (Initiating Packaging Loading): User sets in the Interactive Packaging Arrangement Decision-maker System (IPADS) for initiating a loading process. The user triggers a loading command via the User Interface (FIG.1:102) that enables the Loading Unloading Object Manager (FIG.1:104), the Objects Outer Data Acquisition Module (FIG.1:106) and the Container Inner Data Acquisition Module (FIG.1:108) accordingly. Then, the process goes to step 604.

Step 604 (Enabling Container Data Acquisition): The Container Inner Data Acquisition Module (FIG.1:106) receives the user loading command. The Container Capture System Interface (FIG.4:402) selects from a series of embedded capture techniques the adequate one satisfying the container profile, creates the container input criteria accordingly and connects the Container Identification Module (FIG.4:404) for initiating a container identification. Then the process goes to step 606.

Next on Step 606 (Identifying Compatible Container/Application): The Container Identification Module (FIG.4:404) reads the container input criteria, checks the container compatibility in regards to the user requirements (Req) and allows the user to insert interactively an identifier to the container for business purpose or equivalent. In addition, it can treat a container from a list, like a bill of material (BOM). If the container input criteria meet the user requirements (Req) then the Container Identification Module (FIG.4:404) identifies unambiguously the container (ID_Container) and initiates the Container Inner 3D Processing Module (FIG.4:406) for action. Then, the process goes to step 608 (branch Yes of the comparator 606) otherwise the container is rejected (branch No of the comparator 606), a notification is sent to the user via the User Interface (FIG.1:102) and the process goes back to step 604.

Step 608 (Referencing Container Inner 3D Data): The Container Inner 3D Processing Module (FIG.4:406) estimates a container inner boundary by interpreting the container input criteria it receives from step 606. The Container Inner 3D Module (FIG.4:408) determines an equivalent 3D parallelepiped volumetric image of the inner boundary from the original container free form and creates a formatted image compatible with the placement tool. Then, it concatenates the formatted container image with the container input criteria and generates a container reference (3D Container) accordingly. The container reference is hosted in the Container Inner 3D Referential (FIG.4:410) and provides the Packaging Arrangement Engine (FIG.1:110) with the equivalent 3D parallelepiped (3D_Container) volumetric image for modeling, simulating the volume reconstruction and displaying result before initiating the object placement into the container. Moreover, it provides the Loading Unloading Object Manager (FIG.1:104) with the necessary container input criteria (ID_Container) to monitor safely the object loading process. Then the process goes to step 610.

Step 610 (Enabling Objects Data Acquisition): The Objects Outer Data Acquisition Module (FIG.1:106) receives the user loading command. The Object Capture System Interface (FIG.3:302) selects from a series of embedded capture techniques the adequate one satisfying the object profile, creates the object input criteria accordingly and connects the Object Collection and Identification Module (FIG.4:404) for initiating an object identification. Then the process goes to step 612.

Next on Step 612 (Identifying Compatible Object/Application): The Object Collection and Identification Module (FIG.3:304) collect a series of objects (Object), reads the object input criteria, authenticates the object by using an authentication signature key and checks the object compatibility in regards to the other ones and to the user requirements (Req). In addition, it allows the user to insert an identifier to an object for business purpose or equivalent and can treat objects from an external list, like a bill of material (BOM). If the object input criteria meet the user requirements (Req) then the Object Collection and Identification Module (FIG.3:304) identifies unambiguously the object (ID_Object) and initiates the Object Outer 3D Processing Module (FIG.3:306) for action. Then, the process goes to step 614 (branch Yes of the comparator 612) otherwise the object is rejected (branch No of the comparator 612), a notification is sent to the user via the User Interface (FIG.1:102) and the process goes back to step 610.

Step 614 (Referencing Object Outer 3D Data): The Object Outer 3D Processing Module (FIG.3:306) estimates an object outer boundary by interpreting the object input criteria it receives from step 612. The Object Outer 3D Module (FIG.3:308) determines an equivalent 3D parallelepiped relief image of the outer boundary from the original object free form and creates a formatted image compatible with the placement tool. Then, it concatenates the formatted object image with the object input criteria and generates an object reference (3D_Object) accordingly. The object reference is hosted in the Object Outer 3D Referential (FIG.3:310) and provides the Packaging Arrangement Engine (FIG.1*:110*) with the equivalent 3D parallelepiped (3D_Object) relief image for modeling, simulating the volume reconstruction and displaying result before initiating the object placement into the container during a loading operation. Moreover, it provides the Loading Unloading Object Manager (FIG.1:104) with the necessary object input criteria (ID_Object) to monitor safely the object loading process. Then the process goes to step 616.

Step 616 (Processing Loading Scenario): The Loading Unloading Object Manager (FIG.1:104) collects the identified objects (ID_Object) and container (ID_Container) for interpreting their input criteria, runs the user commands (Command), receives eventually some scenario adjustments (Scenario_out), in real time, and treats feedback messages (Feedback) for processing a loading scenario (Scenario_in) accordingly. Then, the Loading Unloading Object Manager (FIG.1:104) generates a loading scenario containing the packaging scenario guidance (Scenario_in) and host them into the Loading Scenario Database (FIG.2:204). The loading scenario serves as reference when initiating the Packaging Arrangement Engine (FIG.1:110) for action as well as when initiating an unloading process and finally when initiating a loading-unloading comparison process. Then the process goes to step 618.

Step 618 (Initiating Packaging Arrangement): The Packaging Arrangement Engine (FIG.1:110) receives the object references (3D_Object) from the Object Outer Data Referential (FIG.3:310), the container references (3D Container) from the Container Inner Data Referential (FIG.4:410) and applies external criteria (Ext_criteria). Furthermore, it receives the user commands (Command) and the loading scenario from the Loading Unloading Object Manager (FIG.1:104). The Packaging Arrangement Engine (FIG.1:110) parses and interprets 3D data gathering, deals with the objects, the container and the external input criteria, determines some packaging arrangement iterations, displays to the user the three-dimensional map placement feasibilities and places the objects in the container according to the loading scenario instructions (Scenario_in). Then it simulates different pre-placement possibilities, rates the packaging arrangement performance, diagnoses placement failure rate and eventually defines a placement adjustment to be applied to the ongoing loading scenario in real time. For each placement's iteration is created a referential file containing all loading scenario parameters (Scenario_out) and an associated feedback message (Feedback) that prompts the user to pause and/or to adjust the scenario according to the placement situation and/or to confirm an action until the final iteration occurs. The Scenario Referential Buffer (FIG.5:508) stores referential files representing each placement iteration. The Packaging Arrangement Engine (FIG.1:110) identifies an optimum loading scenario (Scenario_out) accordingly that will serve afterwards to run an unloading process. Then the process goes to step 620.

Step 620 (Initiating Packaging Unloading): The user sets in the Interactive Packaging Arrangement Decision-maker System (IPADS) for initiating an unloading process via the User Interface (FIG.1:102) that enables the Loading Unloading Object Manager (FIG.1:104). Then the process goes to step 622.

Step 622 (Processing Unloading Scenario): The loading scenario (Scenario_in) is propagated from the Loading Scenario Database (FIG.2:204) to the Objects Unloading from Container Module (FIG.2:206). The loading scenario automates the object unloading process. The Objects Unloading from Container Module (FIG.2*:206*) accesses the information related to the objects, interprets them and derives automatically the adequate unloading scenario for monitoring in real time an unloading process of a series of objects from a container in a pre-defined order. Then, the Objects Unloading from Container Module (FIG.2:206) generates a corresponding unloading scenario containing parameters of the ongoing unloading process and stores them into the Unloading Scenario Database (FIG.2:208). Then the process goes to step 624.

Step 624 (Initiating Bi-directional Tracking): The "Objects Comparison and Tracking Module (210)" receives the unloading scenario and its loading companion scenario, in real time, and thereby initiates a comparison accordingly. It maintains a bi-directional traceability between a loading and an unloading process and performs a real time tracking from a loading source to an unloading destination all along the packaging supply chain. Furthermore, it compares the objects previously placed into the container with the objects unloaded from the container when the packaging process complete and it detects potential integrity violation. It sustains the loading and unloading processes tracking and generates a comparison file, via the feedback channel (Feedback), to be transmitted to the User Interface (FIG.1:102) for displaying or initiating user action. Measurements, indicators, data collection, results and log files are aligned to ensure packaging business integrity in regards to the user baselines. Then the process goes to step 626.

Step 626 (Is unloading process Complete): A status determines the completion of the object unloading process. Loading scenario, unloading scenario and bi-directional tracking results determine the completion phase of the object unloading process. Based on the status, the Loading Unloading Object Manager (FIG.1:104) stops the unloading process (branch Yes of the comparator 626) and the process goes to step 628, otherwise the Loading Unloading Object Manager (FIG.1:104) continues the unloading process (branch No of the comparator 626) and the process loops back to step 622.

Step 628 (Ending Packaging Unloading): The Loading Unloading Object Manager (FIG.1:104) prompts the user about unloading process completion and archives all necessary parameters related to the packaging arrangement process in the Loading Scenario Database (FIG.2:204) to serve as referential for replicating to another loading-unloading packaging process.

It has to be appreciated that while the invention has been particularly shown and described with reference to a preferred embodiment, various changes in form and detail may be made therein without departing from the spirit, and scope of the invention.

## Claims

1. In a packaging arrangement system having multiple technique capabilities for determining the homogeneity between an object and a container a method for assisting a user when stowing a series of heterogeneous and eclectic objects into a free-form geometric container to be unloaded afterwards in a predefined order. The packaging arrangement system having at least an object identification mechanism and a container identification mechanism both coupled to a knowledge-database, a packaging arrangement engine coupled to a referential buffer and further having a bi-directional tracking mechanism, the method comprising the steps of:
- identifying among a series of heterogeneous objects, a set of objects to be stowed homogeneously in a container and;
- identifying among a series of container, a container that is convenient for packaging a series of selected objects and;
- referencing both objects and a container that are compatible together and;
- determining a loading scenario for stowing an object into a container and;
- monitoring an unloading scenario of an object from a container thereof and;
- maintaining a bi-directional traceability between an unloading scenario and a loading companion scenario.

2. The method cited in claim 1, wherein the method is performed in real time and further comprises means for notifying a user of the processing of the packaging arrangement.

3. The method cited in claims 1 to 2, wherein the step of identifying among a series of heterogeneous objects, a set of objects to be stowed homogeneously in a container comprises the step of determining the intrinsic characteristics of both the object and the container.

4. The method cited in claims 1, 2 and 3, wherein the step of identifying an object comprises the step of validating the homogeneity of the object in regards to the others ones and the step of validating the homogeneity of the object comprises the step of validating the homogeneity of the object in regards to the container.

5. The method cited in claims 1, 2 and 4, wherein the step of validating the homogeneity of the object in regards to the container comprises the step of identifying among a series of container, a container that is convenient for packaging a series of identified objects.

6. The method cited in claims 4 and 5, wherein the step of validating the homogeneity of an object comprises the step of authenticating an object and the step of authenticating an object comprises the step of encoding an object's authenticity signature key on the surface of the object.

7. The method cited in claim 6 further comprises means for hosting the authentication signature into an additional device, RFID based or equivalent.

8. The method cited in claim 3, wherein the step of determining the intrinsic characteristics of an object and a container comprises the step of selecting among multiple embedded capture techniques the acquisition system satisfying an object as well as a container profile.

9. The method cited in claim 8, wherein the step of selecting an acquisition system comprises the step of using the RFID capabilities and/or Swept volume techniques and/or 3D Digitized files.

10. The method cited in claims 1, 2, 3 and 8, wherein the step of determining the intrinsic characteristics of an object and a container comprises the step of receiving a user requirement allowing a user to insert interactively an identifier to a container and/or an object for business purpose.

11. The method cited in claim 10, further comprises the step of acquiring an object and/or a container from an external list.

12. The method cited in claims 1, 2, 3, 8 and 10, wherein the step of determining intrinsic characteristics comprises the step of extrapolating corresponding input criteria.

13. The method cited in claims 1 and 2, wherein the step of referencing both objects and a container that are compatible together comprises the step of rejecting an unidentified object or/and container and the step of rejecting an unidentified object or/and container comprises the step of issuing an identification of the object or/and container thereof;

14. The method cited in claims 1, 2, 12 and 13, wherein the step of referencing an object comprises the step of acquiring the relief characteristics of an identified object and the step of acquiring the relief characteristics of an object comprises the step of extrapolating the input criteria of the identified object.

15. The method cited in claim 14, further comprises means for transforming the original free form delineation of the outer boundary of an object into an equivalent 3D symbolic parallelogram relief image.

16. The method cited in claims 1, 2, 12 and 13, wherein the step of referencing a container comprises the step of acquiring the volumetric characteristics of an identified container and the step of acquiring the volumetric characteristics of a container comprises the step of extrapolating the input criteria of the identified container.

17. The method cited in claim 16, further comprises means for transforming the original free form delineation of the inner boundary of a container into an equivalent 3D symbolic parallelogram volumetric image.

18. The method cited in claims 1, 2, 14 and 16, wherein the step of referencing objects and a container comprises the step of hosting respectively into a corresponding local database the compatible objects or/and a container that are identified.

19. The method cited in claims 1 and 2, wherein the step of determining a loading scenario for stowing an object into a container comprises the step of interpreting the input criteria of each identified object and the step of interpreting input criteria of each identified object further comprises the step of interpreting the input criteria of the identified container.

20. The method cited in claim 19, further comprises the step of extrapolating the 3D dimensions of each object and container from the input criteria of each identified object and container.

21. The method cited in claims 1, 2, 19 and 20, wherein the step of determining a loading scenario comprises the step of generating 3D map placement feasibility for displaying to the user.

22. The method cited in claim 21, wherein the step of displaying to the user the 3D map placement feasibility of the placement further comprises the step of allowing a user to interact with the packaging arrangement by applying dedicated user commands.

23. The method cited in claims 1, 2 and 19 up to 22, wherein the step of determining a loading scenario comprises the step of monitoring dynamically different placement iterations of the objects into a container by using an interactive feedback mechanism.

24. The method cited in claims 1, 2 and 19 up to 23, further comprises the step of hosting a loading scenario in a local database.

25. The method cited in claims 1 and 2, wherein the step of monitoring an unloading scenario of an object from a container comprises the step of interpreting a loading companion scenario from a loading local database.

26. The method cited in claim 25, further comprises the step of assisting a user all along the unloading process and the step of assisting a user comprises the step of automating sequentially an unloading of a series of objects from a container in a predefined order.

27. The method cited in claims 1, 2, 25 and 26, further comprises the step of generating an unloading scenario thereof and the step of generating an unloading scenario comprises the step of hosting the unloading scenario in a local database.

28. The method cited in claims 1 and 2, wherein the step of maintaining a bi-directional traceability between an unloading scenario and a loading companion scenario comprises the step of comparing an unloading scenario with its loading companion scenario both hosted in their respective local databases.

29. The method cited in claim 28, further comprises the step of detecting integrity transportation violations from a source to a destination all along the packaging supply chain and the step of detecting violations comprises the step of reporting violations to the user.

30. A computer program product comprising programming code instructions for executing the steps of the method according to anyone of claims 1 to 29 when said program is executed on a computer.

31. A system comprising means adapted for performing the steps of the method according to anyone of claims 1 to 30.
